# EUROPÄISCHE PATENTSCHRIFT

(11) **EP 4 137 822 B1**
(45) Veröffentlichungstag und Bekanntmachung des Hinweises auf die Patenterteilung: **17.04.2024**
(21) Anmeldenummer: 21191703.4
(22) Anmeldetag: 17.08.2021
(51) Int. Cl.: G01P 15/04, G01P 15/08

(54) **VERFAHREN ZUR ERHÖHUNG EINER AUSFALLSICHERHEIT EINER INDUSTRIELLEN EIN-/AUSGABEBAUGRUPPE UND EINE EIN-/AUSGABEBAUGRUPPE**
METHOD FOR INCREASING THE RELIABILITY OF AN INDUSTRIAL INPUT / OUTPUT ASSEMBLY AND INPUT / OUTPUT ASSEMBLY
PROCÉDÉ D'AUGMENTATION DE LA SÉCURITÉ D'UN MODULE INDUSTRIEL D'ENTRÉE / DE SORTIE ET MODULE INDUSTRIEL D'ENTRÉE / DE SORTIE

(43) Veröffentlichungstag der Anmeldung: 22.02.2023
(73) Patentinhaber: Siemens Aktiengesellschaft, 80333 München (DE)
(72) Erfinder: Schmidt, Sarah, 09113 Chemnitz (DE); Kroemer, Rene, 09337 Hohenstein-Ernstthal (DE)
(74) Vertreter: Siemens Patent Attorneys

(56) Entgegenhaltungen:
- JP-A- 2019 152 944
- US-A1- 2013 317 777
- US-A1- 2019 360 320

## Beschreibung

Die Erfindung betrifft ein Verfahren zur Erhöhung einer Ausfallsicherheit einer industriellen Ein-/Ausgabebaugruppe, wobei eine von außen auf die Ein-/Ausgabebaugruppe einwirkende mechanische Belastung auf der Ein-/Ausgabebaugruppe mittels eines Beschleunigungssensors ermittelt wird, wobei geprüft wird, ob die Belastung einen vorgebbaren Grenzwert überschreitet und wenn das der Fall ist, wird entsprechend einer Höhe der Überschreitung ein Wert einer Belastungssumme entsprechend erhöht.

Des Weiteren betrifft die Erfindung eine Ein-/Ausgabebaugruppe umfassend einen Beschleunigungssensor, eine Messeinrichtung ausgestaltet eine von außen einwirkende mechanische Belastung mittels des Beschleunigungssensors zu messen, weiteren aufweisend ein Prüfmittel, ausgestaltet zu prüfen, ob die Belastung einen vorgebbaren Grenzwert überschritten hat.

Industrielle Ein-/Ausgabebaugruppen werden in der Industrieautomatisierung, insbesondere als eine dezentrale Peripherie, zum Ansteuern von Aktoren und Auslesen von Sensoren verwendet. Derartige Baugruppen oder Module der dezentralen Peripherie gehören, je nach Anwendungsbereich, den Schutzklassen IP20 oder IP67 an. Die Baugruppen der IP67 Schutzklasse, beispielsweise der Siemens AG, sind unter anderem durch die Familien ET 200eco PN, ET 200AL und ET 200eco PN M12-L vertreten. Diese Baugruppen können ohne Schaltschrank direkt am Einsatzort montiert werden, z.B. an Roboterarmen oder anderen Maschinenteilen. Baugruppen der Schutzklasse IP67 sind sehr verbreitet für kleine lokale Automatisierungsaufgaben (z.B. Türsteuerungen oder Roboterarm-Anwendungen). Oft werden diese Module unter einer sehr starken mechanischen Belastung eingesetzt, die die spezifizierten Werte übersteigt. Diese kann zu Frühausfällen der Baugruppen führen.

Aus der US2019360320 ist die Abschätzung maximaler Lastamplituden in Bohrsystemen bekannt. Dazu erfolgt ein Vergleich der Belastungswerte (gemessen mit Beschleunigungsaufnehmern) mit Belastungsgrenzwerten. Es wird eine maximale Belastung ermittelt und daraus kann die Lebensdauer bestimmt werden.

Es ist Aufgabe der vorliegenden Erfindung ein Verfahren zur Erhöhung einer Ausfallsicherheit einer Ein-/Ausgabebaugruppe bereitzustellen.

Weiterhin ist es eine Aufgabe der Erfindung, eine Ein-/Ausgabebaugruppe bereitzustellen, welche mit einer erhöhten Ausfallsicherheit in besonders mechanisch belasteten Umgebungen eingesetzt werden kann.

Die Aufgabe wird dadurch gelöst, dass verfahrensgemäß geprüft wird, ob eine Belastung einen vorgebbaren Grenzwert überschreitet und wenn das der Fall ist, dann wird entsprechend einer Höhe der Überschreitung ein Wert einer Belastungssumme entsprechend erhöht, wobei die Belastungssumme kontinuierlich mit einem einer Lebensdauer einer Ein-/Ausgabebaugruppe kennzeichnenden Maximalbelastungswert verglichen wird, und für den Fall, dass der Maximalbelastungswert erreicht ist, wird eine Wartungsmeldung abgesetzt. Sollte eine Ein-/Ausgabebaugruppe auf einen sich schnell bewegenden Roboterarm derart stark belastet werden, dass seine mechanischen Belastungen hinsichtlich der Beschleunigung die auf der Ein-/Ausgabebaugruppe wirken über die Schwingungsprüfung nach der IEC60068-2-6 hinausgehen, so wird als Ergebnis des Verfahrens für die Ein-/Ausgabebaugruppe ein bevorstehender Systemausfall frühzeitig erkannt und zustandsbasierte Wartung vermieden. Denn, industrielle Ein-/Ausgabebaugruppen unterliegen harten Schwingungsprüfungen bzw. Schockprüfungen, bei der Schwingungsprüfung wird z.B. eine konstante Beschleunigung von 20 G mit einer Schwingungsdauer von 10 Frequenzdurchläufen pro Achse in jeder der drei zueinander senkrechten Achsen durchgeführt. Bei einer Schockbelastung mittels eines Halbsinus wird beispielsweise ein Schock von 30 G für die Dauer von 18 µs angelegt. Auch hier wird jeweils in jeder der drei zueinander senkrechten Achsen der Schock bei der Prüfung als Belastung eingeprägt.

Eine weitere Verbesserung des Verfahrens sieht vor, mit dem Beschleunigungssensor einen zeitkontinuierlichen Signalverlauf aufzuzeichnen und anhand einer Integration die Belastungssumme zu errechnen.

Verfahrensgemäß ist weiterhin vorgesehen, die Messwerte für die mechanische Belastung statistisch auszuwerten. Die Messwerte, die der Beschleunigungssensor liefert, werden nach dem sie ausgelesen wurden, statistisch ausgewertet, z.B. durch Mittelwertbildung um Informationen aus der Umwelt der Ein-/Ausgabebaugruppe zu erhalten.

Das Verfahren wird noch weiter verbessert, wenn für die Berechnung der Belastungssumme eine Masse der Ein-/Ausgabebaugruppe berücksichtigt wird. Da die Belastungen in der Regel durch Beschleunigungen erfolgen und dabei Eigengewicht der Ein-/Ausgabebaugruppe von entscheidender Bedeutung ist, können die Kräfte bezogen auf das Eigengewicht der Baugruppe berücksichtigt werden.

Auch ist es von Vorteil, wenn für die Berechnung der Belastungssumme eine Temperatur der Ein-/Ausgabebaugruppe berücksichtigt wird. Denn wird eine Ein-/Ausgabebaugruppe bei extremen Temperaturen zusätzlich noch Erschütterungen und Vibrationen ausgesetzt, so können leicht kleine Risse zwischen Leiterplatten und aufgebrachten Bauteilen entstehen, die wiederum zum Ausfall der kompletten Elektronik führen können. Also wird durch Berücksichtigung der Temperatur eine Ausfallvorhersagewahrscheinlichkeit verbessert.

Auch ist es möglich, einen Maximalbelastungswert durch experimentelle Schwingungs- und Schockprüfung zu ermitteln. Dies wäre dann eine Ermittlung einer Schwingungsprüfung dies kommt dann einer Schwingungsprüfung gleich, welche weit über die Anforderungen nach der IEC60068-2-6 und der IEC60068-2-27 durchgeführt hinausgeht, denn bei dieser experimentellen Ermittlung würde man die Baugruppe so lange schocken, bis sie tatsächlich ausfällt. Dies kommt dann einer tatsächlichen Versagensgrenze gleich, welche durch experimentelle Schwingungs- und Schockprüfung ermittelt wird und der Wert für die tatsächliche Versagensgrenze in der Ein-/Ausgabebaugruppe für die Ausgabe einer Alarmmeldung verwendet wird.

Zusammenfassend kann verfahrensgemäß gesagt werden, dass die mechanischen Belastungen einer Ein-/Ausgabebaugruppe bestimmt werden können und es können Aussagen über eine mechanische Alterung der Ein-/Ausgabebaugruppe abgeleitet werden. Mittels dieser Information können Überwachungen und Maintenance Alarme mit konfigurierbaren Schwellwerten realisiert werden.

Werden die Messwerte zusätzlich mit Zeitstempeln versehen, sind Aussagen über die vergangene Entwicklung der Maschinenbewegung möglich. Durch eine statistische Verarbeitung der Messdaten werden dabei Grenzbelastungen erkannt. Durch eine Differenzierung der Beschleunigungsmesswerte sind Aussagen über einen zurückgelegten Weg möglich, während durch eine Integration der Messwerte eine mechanische Belastung über die Zeit bewertet werden kann. Insbesondere aus der Integration der Messwerte können Aussagen über die Belastung von Kontakten, Lötstellen, Einpressverbindungen und ähnlichen, während des Lebenszykluses der Ein-/Ausgabebaugruppe gemacht werden. Hier spielt auch die Berücksichtigung der inneren Temperatur der Ein-/Ausgabebaugruppe eine wesentliche Rolle. Daraus ist eine maximale Nutzungszeit der Ein-/Ausgabebaugruppe prozessabhängig bestimmbar.

Diese Information ist für Kunden nützlich, um eine volle von den Einsatzbedingungen abhängige Lebenszeit der Ein-/Ausgabebaugruppe ausnutzen zu können. Dies führt zu einem nachhaltigen Umgang mit Ressourcen, da keine Ein-/Ausgabebaugruppen frühzeitig ausgetauscht werden müssen, welche wenig belastet wurden und demnach noch länger halten.

Die eingangs genannte Aufgabe wird ebenso gelöst durch eine Ein-/Ausgabebaugruppe umfassend einen Beschleunigungssensor, eine Messeinrichtung ausgestaltet eine von außen einwirkende mechanische Belastung mittels des Beschleunigungssensors zu messen, ein Prüfmittel ausgestaltet zu prüfen, ob die Belastung einen vorgebbaren Grenzwert überschreitet, einen Belastungssummen-Zähler ausgestaltet eine Höhe der Überschreitung zu einer Belastungssumme zu addieren, ein Überwachungsmittel ausgestaltet die Belastungssumme kontinuierlich mit einen eine Lebensdauer der Ein-/Ausgabebaugruppe kennzeichnenden Maximalbelastungswert zu vergleichen, und für den Fall, dass der Maximalbelastungswert erreicht ist, eine Wartungsmeldung abzusetzen.

Nun hat man mit Vorteil eine Ein-/Ausgabebaugruppe geschaffen, welche einen bevorstehenden Systemausfall frühzeitig erkennt. Eine Qualität einer derartigen Ein-/Ausgabebaugruppe ist nun enorm gestiegen, da notwendige Wartung und starke Alterung frühzeitig erkannt werden können. Dadurch können Ausfälle im Automatisierungssystem des Kunden vermieden werden und dies führt zu weniger Ausfällen des Fertigungsprozesses.

Die Ein-/Ausgabebaugruppe weist weiterhin ein Aufzeichnungsmittel auf, welches mit dem Beschleunigungssensor in Verbindung steht und einen zeitkontinuierlichen Signalverlauf aufzeichnet, wobei ein Integrations-Mittel vorhanden ist, welches ausgestaltet ist, anhand einer Integration über den Signalverlauf die Belastungssumme zu errechnen.

In einer weiteren Verbesserung der Ein-/Ausgabebaugruppe weist diese ein Verarbeitungsmodul auf, welches zeitkontinuierlich die Werte über einen Analog-Digital-Wandler umsetzt und eine Schwingungsanalyse nach einer Transformation im Frequenzbereich durchführt und die Messwerte für die mechanische Belastung statistisch auswertet.

Die Messwerte, die der Beschleunigungssensor in der Ein-/Ausgabebaugruppe liefert, werden nach dem sie ausgelesen wurden, statistisch ausgewertet, z.B. durch Mittelwertbildung, um Informationen aus der Umwelt des Moduls zu gewinnen.

Um insbesondere eine mechanische Alterung genauer zu bestimmen, wird in der Baugruppe ein parametrierbarer Speicherplatz vorgesehen, in welchem die Masse der Ein-/Ausgabebaugruppe eingegeben werden kann, die Masse wird für die Berechnung der Belastungssumme abfragbar sein. Insbesondere bei bewegten Massen spielt das Eigengewicht der Baugruppe für die mechanische Belastung eine entscheidende Rolle.

Ebenso spielt eine Temperatur, welcher die Baugruppe ausgesetzt ist, für eine mechanische Alterung eine weitere entscheidende Rolle. Darum weist die Ein-/Ausgabebaugruppe einen Temperatur-Sensor auf, wobei für die Berechnung der Belastungssumme eine Temperatur der Ein-/Ausgabebaugruppe abfragbar ist.

Weiterhin weist die Ein-/Ausgabebaugruppe weitere parametrierbare Speicherplätze auf, in welchen ein experimentell ermittelter Maximalbelastungswert oder eine tatsächliche Versagensgrenze eintragbar ist.

Eine bevorzugte Ausgestaltung sieht vor, dass der Beschleunigungssensor als ein MEMS-Sensor ausgestaltet ist.

Ein weiterer Kundenutzen ist die Ausgabe der vorverarbeiteten Messwerte über ein Feldbussystem, so dass der Kunde diese Messwerte weiter verwenden und verarbeiten kann. Dazu hat die Ein-/Ausgabebaugruppe eine Feldbusschnittstelle und eine Sendeeinrichtung, wobei mittels der Sendeeinrichtung alle Messwerte und Wartungsmeldungen über die Feldbusschnittstelle an einen Feldbus übertragbar sind.

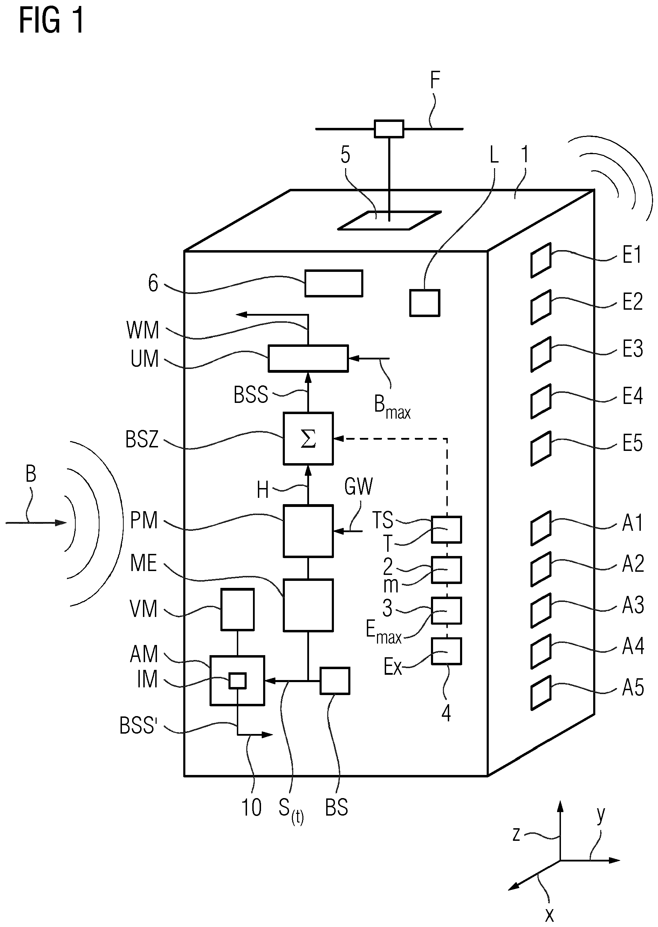

Die Zeichnung zeigt ein Ausführungsbeispiel der Erfindung dabei zeigt die Figur eine Ein-/Ausgabebaugruppe.

Gemäß der Figur ist eine Ein-/Ausgabebaugruppe 1 umfassend einen Beschleunigungssensor BS, eine Messeinrichtung ME und ein Prüfmittel PM dargestellt. Die Messeinrichtung ME nimmt von dem Beschleunigungssensor BS Messwerte entgegen und überprüft die Messwerte ob diese einen vorgebbaren Grenzwert GW überschreiten. Für jede Überschreitung des vorgebbaren Grenzwertes GW wird eine Höhe H der Überschreitung in einen Belastungssummen-Zähler BSZ aufsummiert. Um diese aufsummierten Belastungen zu überwachen, ist wiederum ein Überwachungsmittel UM vorhanden, welches ausgestaltet ist, die Belastungssumme BSS kontinuierlich mit einem eine Lebensdauer L der Ein-/Ausgabebaugruppe 1 kennzeichnenden Maximalbelastungswert B_{Max} zu vergleichen, und für den Fall, dass der Maximalbelastungswert B_{Max} erreicht ist, eine Wartungsmeldung WM abzusetzen.

Weiterhin weist die Ein-/Ausgabebaugruppe 1 ein Aufzeichnungsmittel AM auf, welches mit dem Beschleunigungssensor BS in Verbindung steht und einen zeitkontinuierlichen Signalverlauf S(t) aufzeichnet, wobei ein Integrations-Mittel IM vorhanden ist, welches ausgestaltet ist, anhand einer Integration über den Signalverlauf S(t) die Belastungssumme BSS' zu errechnen.

Ein Verarbeitungsmodul VM ist ausgestaltet, zeitkontinuierliche Werte über einen Analog-Digital-Wandler umzusetzen und eine Schwingungsanalyse nach einer Transformation im Frequenzbereich, beispielsweise der Fast Fourier-Transformation, durchzuführen und die Messwerte für die mechanische Belastung B statistisch auszuwerten.

Im Hinblick auf eine noch genauere Aussage über einen möglichen zukünftigen Ausfallzeitpunkt weist die Ein-/Ausgabebaugruppe 1 parametrierbare Speicherplätze 2,3,4 auf. In einem ersten Speicherplatz 2 ist eine Masse m der Ein-/Ausgabebaugruppe 1 abspeicherbar. In einem zweiten Speicherplatz 3 ist ein experimentell ermittelter Maximalbelastungswert E_{Max} abspeicherbar bzw. von außen parametrierbar. In einem dritten Speicherplatz 4 ist eine Versagensgrenze Ex parametrierbar.

Die eingespeicherten Werte wie Masse m, experimentell ermittelter Belastungswert E_{Max} und Versagensgrenze Ex können bei der Berechnung über einen zukünftigen Versagenszeitpunkt mit einbezogen werden.

Zusätzlich dazu liefert ein Temperatursensor TS die derzeitig vorherrschende Temperatur T in der Ein-/Ausgabebaugruppe 1. Sollte zusätzlich zu einer mechanischen Belastung B auch noch die Temperatur T der Baugruppe sehr hoch sein, so steigt selbstverständlich eine durch eine mechanische Belastung B hervorgerufene mechanische Alterung noch weiter an und die Baugruppe könnte schneller ausfallen.

Um die erfassten Messwerte auch an ein übergeordnetes Automatisierungssystem weitergeben zu können, weist die Ein-/Ausgabebaugruppe 1 eine Feldbusschnittstelle 5 und eine Sendeeinrichtung 6 auf, wobei mittels der Sendeeinrichtung 6 alle Messwerte und Wartungsmeldungen WM über die Feldbusschnittstelle 5 an einen Feldbus 7 übertragbar sind.

Die mechanischen Belastungen B, welche auf die Ein-/Ausgabebaugruppe 1 einwirken, werden üblicherweise in einem x,y,z Koordinatensystem auf drei Achsen ausgeführt. Für die Entgegennahme von dezentralen Prozesswerten, weist die Baugruppe einen ersten Eingang E1 bis einen fünften Eingang E5 auf, für die Ausgabe von Aktorwerten für den industriellen Prozess weist die Baugruppe einen ersten Ausgang A1 bis zu einem fünften Ausgang A5 auf.

## Patentansprüche

1. Verfahren zur Erhöhung einer Ausfallsicherheit einer industriellen Ein-/Ausgabebaugruppe (1), wobei eine von außen auf die Ein-/Ausgabebaugruppe (1) einwirkende mechanische Belastung (B) auf der Ein-/Ausgabebaugruppe (1) mittels eines Beschleunigungssensors (BS) ermittelt wird, wobei geprüft wird, ob die Belastung (B) einen vorgebbaren Grenzwert (GW) überschreitet und wenn das der Fall ist, dann wird entsprechend einer Höhe (H) der Überschreitung ein Wert einer Belastungssumme (BSS) entsprechend erhöht,
wobei die Belastungssumme (BSS) kontinuierlich mit einem eine Lebensdauer (L) der Ein-/Ausgabebaugruppe (1) kennzeichnenden Maximalbelastungswert (B_{Max}) verglichen wird, und für den Fall, dass der Maximalbelastungswert (B_{Max}) erreicht ist, wird eine Wartungsmeldung (WM) abgesetzt.

2. Verfahren nach Anspruch 1, wobei mit dem Beschleunigungssensor (BS) ein zeitkontinuierlicher Signalverlauf (S₍ₜ₎) aufgezeichnet wird und anhand einer Integration die Belastungssumme (BSS) errechnet wird.

3. Verfahren nach Anspruch 1 oder 2, wobei die Messwerte für die mechanische Belastung (B) statistisch ausgewertet werden.

4. Verfahren nach einem der Ansprüche 1 bis 3, wobei für die Berechnung der Belastungssumme (BSS) eine Masse (m) der Ein-/Ausgabebaugruppe (1) berücksichtigt wird.

5. Verfahren nach einem der Ansprüche 1 bis 5, wobei für die Berechnung der Belastungssumme (BSS) eine Temperatur (T) der Ein-/Ausgabebaugruppe (1) berücksichtigt wird.

6. Verfahren nach einem der Ansprüche 1 bis 5, wobei der Maximalbelastungswert (B_{Max}) durch experimentelle Schwingungs- und Schockprüfung ermittelt wird.

7. Verfahren nach einem der Ansprüche 1 bis 5, wobei eine tatsächliche Versagensgrenze (Ex) durch experimentelle Schwingungs- und Schockprüfung ermittelt wird und der Wert für die tatsächliche Versagensgrenze (Ex) in der Ein-/Ausgabebaugruppe (1) für die Ausgabe einer Alarmmeldung verwendet wird.

8. Ein-/Ausgabebaugruppe (1) umfassend
einen Beschleunigungssensor (BS),
eine Messeinrichtung (ME) ausgestaltet eine von außen einwirkende mechanische Belastung (B) mittels des Beschleunigungssensors (BS) zu messen,
ein Prüfmittel (PM) ausgestaltet zu prüfen, ob die Belastung einen vorgebbaren Grenzwert (GW) überschreitet,
einen Belastungssummen-Zähler (BSZ) ausgestaltet, eine Höhe (H) der Überschreitung zu einer Belastungssumme (BS) zu addieren,
ein Überwachungsmittel (UM) ausgestaltet die Belastungssumme (BSS) kontinuierlich mit einem eine Lebensdauer der Ein-/Ausgabebaugruppe (1) kennzeichnenden Maximalbelastungswert (B_{Max}) zu vergleichen, und für den Fall, dass der Maximalbelastungswert (B_{Max}) erreicht ist, eine Wartungsmeldung (WM) abzusetzen.

9. Ein-/Ausgabebaugruppe (1) nach Anspruch 8, weiterhin aufweisend ein Aufzeichnungsmittel (AM), welches mit dem Beschleunigungssensor (BS) in Verbindung steht und ausgestaltet ist einen zeitkontinuierlichen Signalverlauf (S₍ₜ₎) aufzuzeichnen, wobei ein Integrations-Mittel (IM) vorhanden ist, welches ausgestaltet ist anhand einer Integration über den Signalverlauf (S₍ₜ₎) die Belastungssumme (BSS) zu errechnen.

10. Ein-/Ausgabebaugruppe (1) nach Anspruch 8 oder 9, weiterhin aufweisend ein Verarbeitungsmodul (VM), welches ausgestaltet ist zeitkontinuierliche Werte über einen Analog-Digital-Wandler umzusetzen und eine Schwingungsanalyse nach einer Transformation im Frequenzbereich durchzuführen und die Messwerte für die mechanische Belastung (B) statistisch auszuwerten

11. Ein-/Ausgabebaugruppe (1) nach einem der Ansprüche 8 bis 10, wobei ein parametrierbarer Speicherplatz (2) vorhanden ist, in welchen die Masse (m) der Ein-/Ausgabebaugruppe (1) eingeben werden kann, welche für die Berechnung der Belastungssumme (BSS) abfragbar ist.

12. Ein-/Ausgabebaugruppe (1) nach einem der Ansprüche 8 bis 11, weiterhin aufweisend einen Temperatur-Sensor (TS), wobei für die Berechnung der Belastungssumme (BSS) eine Temperatur (T) der Ein-/Ausgabebaugruppe (1) abfragbar ist.

13. Ein-/Ausgabebaugruppe (1) nach einem der Ansprüche 8 bis 12, wobei weitere parametrierbare Speicherplätze (3,4) vorhanden sind, in welche ein experimentell ermittelter Maximalbelastungswert (E_{Max}) oder eine tatsächliche Versagensgrenze (Ex) eintragbar ist.

14. Ein-/Ausgabebaugruppe (1) nach einem der Ansprüche 8 bis 13, wobei der Beschleunigungssensor (BS) als ein MEMS-Sensor ausgestaltet ist.

15. Ein-/Ausgabebaugruppe (1) nach einem der Ansprüche 8 bis 14, mit einer Feldbusschnittstelle (5) und einer Sendeeinrichtung (6), wobei mittels der Sendeeinrichtung (6) alle Messwerte und Wartungsmeldungen (WM) über die Feldbusschnittstelle (5) an einem Feldbus (7) übertragbar sind.

## Claims

1. Method for increasing fail-safe operation of an industrial input/output assembly (1), wherein an external mechanical load (B) that acts on the input/output assembly (1) is determined by means of an acceleration sensor (BS), wherein a check is performed as to whether the load (B) exceeds a predeterminable limit value (GW) and if that is the case, then a value of a load sum (BSS) is accordingly increased corresponding to an extent (H) to which the value is exceeded,
wherein the load sum (BSS) is continuously compared to a maximum load value (B_{Max}) that characterises a service life (L) of the input/output assembly (1), and for the case that the maximum load value (B_{Max}) is reached, a maintenance message (WM) is output.

2. Method according to claim 1, wherein a time continuous signal curve (S(ₜ)) is recorded using the acceleration sensor (BS) and the load sum (BSS) is calculated with the aid of an integration.

3. Method according to claim 1 or 2, wherein the measured values for the mechanical load (B) are statistically evaluated.

4. Method according to one of claims 1 to 3, wherein a mass (m) of the input/output assembly (1) is taken into consideration for the calculation of the load sum (BSS).

5. Method according to one of claims 1 to 5, wherein a temperature (T) of the input/output assembly (1) is taken into consideration for the calculation of the load sum (BSS).

6. Method according to one of claims 1 to 5, wherein the maximum load value (B_{Max}) is determined by experimental vibration and shock testing.

7. Method according to one of claims 1 to 5, wherein an actual failure limit (Ex) is determined by experimental vibration and shock testing and the value for the actual failure limit (Ex) is used in the input/output assembly (1) for the output of an alarm notification.

8. Input/output assembly (1) comprising
an acceleration sensor (BS),
a measuring device (ME) that is designed so as by means of the acceleration sensor (BS) to measure an external mechanical load (B),
a checking means (PM) that is designed so as to check whether the load has exceeded a predeterminable limit value (GW),
a load sum counter (BSZ) that is designed so as to add to a load sum (BS) an extent (H) to which the predeterminable limit is exceeded,
a monitoring means (UM) that is designed so as to continuously compare the load sum (BSS) to a maximum load value (B_{Max}) that characterises a service life of the input/output assembly (1), and for the case that the maximum load value (B_{Max}) is reached, a maintenance message (WM) is output.

9. Input/output assembly (1) according to claim 8, furthermore having a recording means (AM) that is connected to the acceleration sensor (BS) and is designed to record a time continuous signal curve (S₍ₜ₎), wherein an integration means (IM) is provided that is designed so as to calculate the load sum (BSS) with the aid of an integration via the signal curve (S₍ₜ₎) .

10. Input/output assembly (1) according to claim 8 or 9, furthermore having a processing module (VM) that is designed to convert time continuous values via an analogue-digital converter and to perform a vibration analysis after a transformation in the frequency range and statistically evaluates the measured values for the mechanical load (B).

11. Input/output assembly (1) according to one of claims 8 to 10, wherein a parameterisable memory (2) is provided and the mass (m) of the input/output assembly (1) can be input into said memory and the mass can be retrieved for the calculation of the load sum (BSS).

12. Input/output assembly (1) according to one of claims 8 to 11, furthermore having a temperature sensor (TS), wherein a temperature (T) of the input/output assembly (1) can be retrieved for the calculation of the load sum (BSS).

13. Input/output assembly (1) according to one of claims 8 to 12, wherein further parameterisable memories (3, 4) are provided in which a maximum load value (E_{Max}) that is determined in an experimental manner or an actual failure limit (Ex) can be input into said further parameterisable memories.

14. Input/output assembly (1) according to one of claims 8 to 13, wherein the acceleration sensor (BS) is designed as a MEMS sensor.

15. Input/output assembly (1) according to one of claims 8 to 14, having a fieldbus interface (5) and a transmitting device (6), wherein all the measured values and maintenance messages (WM) can be transmitted by means of the transmitting device (6) via the fieldbus interface (5) to a fieldbus (7).

## Revendications

1. Procédé pour améliorer la fiabilité d'un module (1) industriel d'entrée/de sortie, dans lequel on détermine au moyen d'un capteur (BS) d'accélération une charge (B) mécanique, s'appliquant de l'extérieur au module (1) d'entrée/de sortie, sur le module (1) d'entrée/de sortie, dans lequel on contrôle si la charge (B) dépasse une valeur (GW) limite pouvant être donnée à l'avance et, si c'est le cas, on augmente d'une manière correspondante une valeur d'une somme (BSS) de charge en correspondance avec un niveau (H) du dépassement,
dans lequel on compare la somme (BSS) de charge en continu avec une valeur (Bₘₐₓ) de charge maximum caractérisant une durée (L) de vie du module (1) d'entrée/de sortie et, dans le cas où la valeur (Bₘₐₓ) de charge maximum est atteinte, on émet un message (WM) d'entretien.

2. Procédé suivant la revendication 1, dans lequel, par le capteur (BS) d'accélération, on enregistre une courbe (S(ₜ)) de signal continu dans le temps et on calcule la somme (BSS) de charge à l'aide d'une intégration

3. Procédé suivant la revendication 1 ou 2, dans lequel on exploite statistiquement les valeurs de mesure de la charge (B) mécanique.

4. Procédé suivant l'une des revendications 1 à 3, dans lequel on tient compte pour le calcul de la somme (BSS) de charge d'une masse (m) du module (1) d'entrée/de sortie.

5. Procédé suivant l'une des revendications 1 à 5, dans lequel on tient compte, pour le calcul de la somme (BSS) de la charge, d'une température (T) du module (1) d'entrée/de sortie.

6. Procédé suivant l'une des revendications 1 à 5, dans lequel on détermine la valeur (Bₘₐₓ) de charge maximum par un contrôle expérimental de vibration et de choc.

7. Procédé suivant l'une des revendications 1 à 5, dans lequel on détermine une limite (Ex) réelle de défaillance par contrôle expérimental de vibration et de choc et on utilise la valeur de la limite (Ex) de défaillance réelle du module (1) d'entrée/de sortie pour l'émission d'un message d'alerte.

8. Module (1) d'entrée/de sortie comprenant
un capteur (BS) d'accélération,
un dispositif (ME) de mesure conformé pour mesurer, au moyen du capteur (BS) d'accélération, une charge (B) mécanique s'appliquant de l'extérieur,
un moyen (PM) de contrôle conformé pour contrôler si la charge dépasse une valeur (GW) limite pouvant être donnée à l'avance,
un compteur (BSZ) de somme de charge conformé pour additionner un niveau (H) du dépassement à une somme (BS) de charge,
un moyen (UM) de supervision conformé pour comparer la somme (BSS) de charge en continu avec une valeur (Bₘₐₓ) de charge maximum caractérisant une durée de vie du module (1) d'entrée/de sortie et pour émettre un message (WM) d'entretien dans le cas où la valeur (Bₘₐₓ) de charge maximum est atteinte.

9. Module (1) d'entrée/de sortie suivant la revendication 8, comportant en outre un moyen (AM) d'enregistrement, qui est en liaison avec le capteur (BS) d'accélération et qui est conformé pour enregistrer une courbe (S(ₜ)) de signal continuellement dans le temps, dans lequel il y a un moyen (IM) d'intégration, qui est conformé pour calculer la somme (BSS) de charge à l'aide d'une intégration sur la courbe (S(ₜ)) du signal.

10. Module (1) d'entrée/de sortie suivant la revendication 8 ou 9, comportant en outre un module (VM) de traitement, qui est conformé pour transformer par un convertisseur analogique-numérique des valeurs continuelles dans le temps et pour effectuer une analyse de vibration après une transformation dans le domaine de fréquence et pour exploiter statistiquement les valeurs de mesure de la charge (B) mécanique.

11. Module (1) d'entrée/de sortie suivant l'une des revendications 8 à 10, dans lequel il y a un emplacement (2) de mémoire paramétrable, dans lequel la masse (m) du module (1) d'entrée/de sortie peut être entrée, emplacement qui peut être interrogé pour le calcul de la somme (BSS) de charge.

12. Module (1) d'entrée/de sortie suivant l'une des revendications 8 à 11, comportant en outre un capteur (TS) de température, dans lequel, pour le calcul de la somme (BSS) de la charge, une température (T) du module (1) d'entrée/de sortie peut être demandée.

13. Module (1) d'entrée/de sortie suivant l'une des revendications 8 à 12, dans lequel il y a d'autres emplacements (3, 4) de mémoire paramétrables, dans lesquels une valeur (Eₘₐₓ) de charge maximum déterminée expérimentalement ou une limite (Ex) de défaillance réelle peut être entrée.

14. Module (1) d'entrée/de sortie suivant l'une des revendications 8 à 13, dans lequel le capteur (BS) d'accélération est conformé en capteur MEMS.

15. Module (1) d'entrée/de sortie suivant l'une des revendications 8 à 14, comportant une interface (5) de bus sur site et un dispositif (6) d'émission, dans lequel, au moyen du dispositif (6) d'émission, tous les valeurs de mesure et messages (WM) d'entretien peuvent être transmis à un bus (7) sur site par l'interface (5) de bus sur site.
